# EUROPEAN PATENT SPECIFICATION

(11) **EP 4 391 364 B1**
(45) Date of publication and mention of the grant of the patent: **16.07.2025**
(21) Application number: 22383247.8
(22) Date of filing: 21.12.2022
(51) Int. Cl.: H02S 50/00

(54) **SOLAR TRACKER AND CONTROL METHOD OF THE SOLAR TRACKER**
SONNENFOLGER UND STEUERUNGSVERFAHREN DES SONNENFOLGERS
SUIVEUR SOLAIRE ET PROCÉDÉ DE COMMANDE DU SUIVEUR SOLAIRE

(43) Date of publication of application: 26.06.2024
(73) Proprietor: P4Q Electronics, S.L., 48810 Alonsotegi (ES)
(72) Inventor: VEGAS DIEZ, David, 39880 Valle de Villaverde (ES); FERNANDEZ DIAZ, Jose Maria, 48008 Bilbao (ES)
(74) Representative: Igartua, Ismael

(56) References cited:
- EP-A1- 3 396 271
- US-A1- 2014 196 761
- US-A1- 2021 297 038

## Description

### TECHNICAL FIELD

The present invention relates to solar trackers and control methods of the operation of said trackers.

### PRIOR ART

Solar trackers orient photovoltaic solar panels towards the sun in order to track the sun's trajectory throughout the day and maximize energy capture. Generally, the efficiency of photovoltaic solar panels is maximized when they receive solar radiation perpendicular to the surface of the panels.

Horizontal solar trackers rotate the photovoltaic solar panels about an axis of rotation which is substantially horizontal with respect to the ground. The axis of rotation is aligned in the north-south direction and rotates in the east-west direction for solar radiation to strike as perpendicular as possible to the surface of the photovoltaic solar panels throughout the day. In high-capacity solar plants, horizontal solar trackers have several axes and are arranged in several rows of photovoltaic solar panels, with one axis per row.

Horizontal solar trackers comprise a plurality of posts extending and separated longitudinally along an axis and a support structure which is supported on the plurality of posts. The support structure comprises a main crossbar extending along the axis and a plurality of transverse crossbars oriented orthogonally to the main crossbar. A plurality of photovoltaic solar panels is arranged on the support structure and a rotation is applied to the main crossbar to move the photovoltaic solar panels and orient same towards the sun by means of an electric motor which is operatively coupled to the main crossbar.

There are different mechanical solutions to cause the rotational movement of the main crossbar, seeking to maximize the total number of photovoltaic solar panels that are moved with a single electric motor at all times. This is usually achieved with complex mechanical systems which allow movement to be transmitted from a single motor. For example, WO2000063625A1 shows a solar tracker with several rows of photovoltaic solar panels which uses transverse coupling rods to transmit the movement of an electric motor to all the main crossbars of the solar tracker. WO2019183492A1 shows a solar tracker with several linear actuators distributed along the axis of the solar tracker to apply a rotation on the main crossbar, and the movement of an electric motor is transmitted to the linear actuators by means of longitudinal coupling systems.

US20200304059A1 shows a solar tracker comprising a plurality of photovoltaic solar panels with a first set of panels and a second set of panels, a plurality of posts extending and separated longitudinally along an axis, a support structure which is supported on the plurality of posts, the support structure comprises a main crossbar extending along the axis and a plurality of transverse crossbars oriented orthogonally to the main crossbar, the plurality of photovoltaic solar panels is arranged on the support structure, a first electric motor which is operatively coupled to a first part of the main crossbar to apply a rotation to the first part of the main crossbar and move the first set of panels to a final angular position, and a second electric motor which is operatively coupled to a second part of the main crossbar, spaced from the first part, to apply a rotation to the second part of the main crossbar and move the second set of panels to the final angular position. In that sense, document US20200304059A1 shows a solar tracker with several electric motors distributed along the main crossbar of the solar tracker. The electric motors are controlled by means of a single central controller and attached by means of a power line which applies a voltage to all the electric motors at the same time so that they can act simultaneously.

US20210297038A1 shows a solar tracker for capturing solar radiation comprising a support, a rotating shaft, and solar panels. The solar tracker also comprises a tracking system capable of operating the rotating shaft for optimal placement of the solar panel and a blocking system connected to the rotating shaft.

### DISCLOSURE OF THE INVENTION

The object of the invention is to provide a solar tracker and a control method of the solar tracker, as defined in the claims.

An aspect of the invention relates to a solar tracker comprising a plurality of photovoltaic solar panels with a first set of panels and a second set of panels; a plurality of posts extending and separated longitudinally along an axis; a support structure which is supported on the plurality of posts, the support structure comprises a main crossbar extending along the axis and a plurality of transverse crossbars oriented orthogonally to the main crossbar, the plurality of photovoltaic solar panels is arranged on the support structure; a first electric motor which is operatively coupled to a first part of the main crossbar to apply a rotation to the first part of the main crossbar and move the first set of panels to a final angular position; a second electric motor which is operatively coupled to a second part of the main crossbar, spaced from the first part, to apply a rotation to the second part of the main crossbar and move the second set of panels to the final angular position; a first position sensor for determining an initial angular position of the first set of panels; a first controller configured to control the first electric motor and move the first set of panels to the final angular position depending on the initial angular position determined by the first position sensor; a second position sensor for determining an initial angular position of the second set of panels; and a second controller configured to control the second electric motor and move the second set of panels to the final angular position depending on the initial angular position determined by the second position sensor.

Another aspect of the invention relates to a control method of the solar tracker defined above, which comprises:
- selecting the final angular position of the plurality of photovoltaic solar panels,
- determining the initial angular position of the first set of panels,
- determining the initial angular position of the second set of panels,
- moving the first set of panels to the final angular position depending on the initial angular position of the first set of panels, and
- moving the second set of panels to the final angular position depending on the initial angular position of the second set of panels.

A solar tracker having a controller for each electric motor, which allows each electric motor to act independently on its respective set of panels, is thereby obtained. Furthermore, each controller has information about the angular position to which the set of panels must be moved, whereby the angular position of each set of panels can be corrected in the event that the sets of panels are misaligned with respect to one another. This independent control of the panels cannot be achieved in systems using a single motor which move all the photovoltaic solar panels at the same time by means of mechanical systems (WO2000063625A1, WO2019183492A1), or in solar trackers using a single controller to move several electric motors which act on the photovoltaic panels at the same time (US20200304059A1).

Furthermore, having information about the angular position of each set of panels separately allows the galloping effect to be detected. Said effect is an aeroelastic instability caused by wind which generates large-amplitude oscillations in the support structures of solar trackers, causing a movement that may end with the structure collapsing. By knowing the angular position of each set of panels and being able to move said panels independently, the sets of panels can be moved to angular positions in which said effect is reduced or cancelled.

These and other advantages and features of the invention will become apparent in view of the figures and detailed description of the invention.

### DESCRIPTION OF THE DRAWINGS

Figures 1 and 2 show schematic views of an example of the solar tracker of the invention with a row of photovoltaic solar panels and two sets of panels in the row.
Figure 3 shows a schematic view of an example of the solar tracker of the invention with three rows of photovoltaic solar panels and more than two sets of panels in each row.
Figure 4 shows a diagram of the controllers according to an example of the solar tracker of the invention.
Figure 5 shows a diagram of the controllers according to another example of the solar tracker of the invention.

### DETAILED DISCLOSURE OF THE INVENTION

The invention relates to a solar tracker comprising a plurality of photovoltaic solar panels 10.

The plurality of photovoltaic solar panels 10 has at least a first set of panels 11 and a second set of panels 12. A first electric motor 13 is operatively coupled to the first set of panels 11 to move the first set of panels 11 to a final angular position and a second electric motor 14 is operatively coupled to the second set of panels 12 to move the second set of panels 12 to the final angular position.

The angular position of a set of panels is the angle defined between the horizontal of the ground and the surface of the photovoltaic solar panels 10 of the set of panels.

The final angular position may be the angular position of the photovoltaic solar panels 10 in which the conversion of solar radiation into electric power is maximized. For example, the final angular position is a position in which the surface of the photovoltaic solar panels 10 is comprised in a plane substantially perpendicular to solar radiation.

The solar tracker comprises a first position sensor 15 for determining an initial angular position of the first set of panels 11 and a second position sensor 16 for determining an initial angular position of the second set of panels 12. The solar tracker also comprises a first controller 17 which is configured to control the first electric motor 13 and move the first set of panels 11 to the final angular position depending on the initial angular position determined by the first position sensor 15, and a second controller 18 which is configured to control the second electric motor 14 and move the second set of panels 12 to the final angular position depending on the initial angular position determined by the second position sensor 16.

In this way, each controller 17 and 18 knows the actual angular position of its respective set of panels 11 and 12 at all times and may calculate the angle at which each set of panels 11 and 12 must be moved in order to reach the final angular position. When the controller determines the angle, the controller calculates the speed at which the set of panels must be moved and powers the motor to move the panels at the calculated speed until reaching the required angular position. The operation of each controller 17 and 18 is described below.

Preferably, the first controller 17 is a master controller and the second controller 18 is a slave controller, the first controller 17 and the second controller 18 being connected to one another through a data and power supply line 35. In this way, although each controller controls its respective electric motor independently, the master controller 17 may monitor all the operations of the slave controller 18, and the master controller 17 may send orders to the slave controller 18 and receive data from the slave controller 18.

The solar tracker comprises a plurality of posts 19 extending and separated longitudinally along at least one axis X and at least one support structure 20 which is supported on the plurality of posts 19. Each support structure 20 comprises a main crossbar 21 extending along the axis X and a plurality of transverse crossbars 22 oriented orthogonally to the main crossbar 21.

Preferably, the position sensors 15 and 16 are accelerometers. Accelerometers measure linear accelerations in one axis, two axes, or three axes.

The first accelerometer 15 is arranged in a part of the support structure 20 that supports the first set of panels 11 and the second accelerometer 16 is arranged in a part of the support structure 20 that supports the second set of panels 12. This ensures that the accelerometers are arranged on the support structure 20 of the photovoltaic solar panels 10. This favours the detection of the galloping effect since measurement is performed directly in the place where the effect occurs.

Even more preferably, the first accelerometer 15 is arranged in an enclosing casing of the first controller 17 which is in turn arranged in a part of the support structure 20 that supports the first set of panels 11, and the second accelerometer 16 is arranged in an enclosing casing of the second controller 18 which is in turn arranged in a part of the support structure 20 that supports the second set of panels 12. This allows the casing of the controller to hold the accelerometer, whereby a compact device which houses the electronics for controlling the electric motor is obtained.

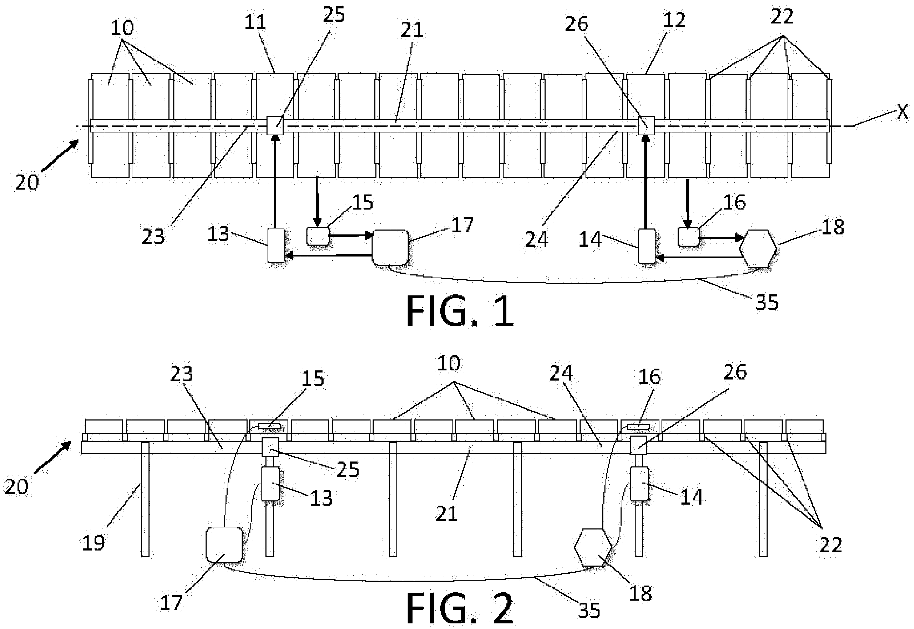

The schematic example of Figures 1 and 2 shows a solar tracker with a row of photovoltaic solar panels 10. The solar tracker comprises a plurality of posts 19 extending and separated longitudinally along an axis X and a support structure 20 which is supported on the plurality of posts 19. The support structure 20 comprises a main crossbar 21 extending along the axis X and a plurality of transverse crossbars 22 oriented orthogonally to the main crossbar 21. The plurality of photovoltaic solar panels 10 is arranged on the support structure 20, the first electric motor 13 is operatively coupled to a first part 23 of the main crossbar 21 to apply a rotation to the first part 23 of the main crossbar 21 and move the first set of panels 11 to the final angular position, and the second electric motor 14 is operatively coupled to a second part 24 of the main crossbar 21, spaced from the first part 23, to apply a rotation to the second part 24 of the main crossbar 21 and move the second set of panels 12 to the final angular position.

Preferably, the first electric motor 13 is operatively coupled to a first actuator 25 which is arranged on the first part 23 of the crossbar longitudinal 21 and the second electric motor 14 is operatively coupled to a second actuator 26 which is arranged on the second part 24 of the crossbar longitudinal 21. The actuator 25 or 26 may be a slew drive, a linear actuator, or any type of actuator commonly used in the photovoltaic sector for coupling to the main crossbar 21 of the support structure 20 of a solar tracker and rotating the main crossbar 21.

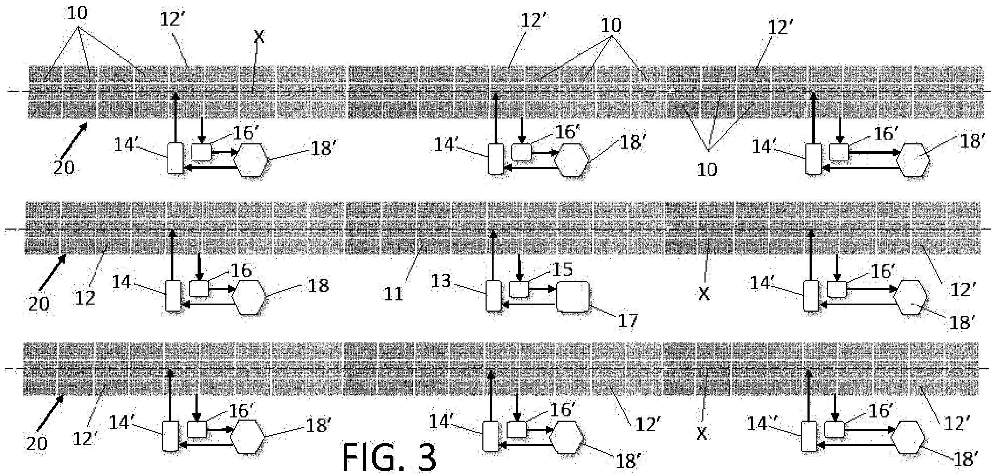

The solar tracker may comprise more than two sets of panels, and each set of panels has an electric motor for moving the set of panels, a position sensor for determining the initial angular position of the set of panels, and a controller for controlling the electric motor and moving the set of panels to the final angular position depending on the initial angular position determined by the position sensor. Furthermore, each motor is operatively coupled to an actuator. For example, Figure 3 shows a solar tracker with three rows of photovoltaic solar panels 10 and each row has three sets of solar panels. The solar tracker has a first controller 17 and several second controllers 18 and 18', wherein the first controller 17 is a master controller of the solar tracker and the second controllers 18 and 18' are slave controllers. The master controller 17 is connected to each of the slave controllers 18 by means of a respective data and power supply line (which for the sake of clarity is not depicted in Figure 3). Preferably, the master controller 17 is located in the centre of the solar tracker.

The plurality of photovoltaic solar panels 10 is connected to a power line 27 to extract the electric power generated by the photovoltaic solar panels 10, and the first electric motor 13 and the second electric motor 14 are connected to the power line 27 to receive electric power from the power line 27. In this way, the electric power generated by the photovoltaic solar panels 10 is utilized to move the sets of panels 11 and 12. The power line 27 is commonly known in the photovoltaic sector as the solar tracker string, and it is the line through which the electric power generated by each photovoltaic solar panel 10 is extracted, which power is generally delivered to a string box, from which electricity is delivered to the grid.

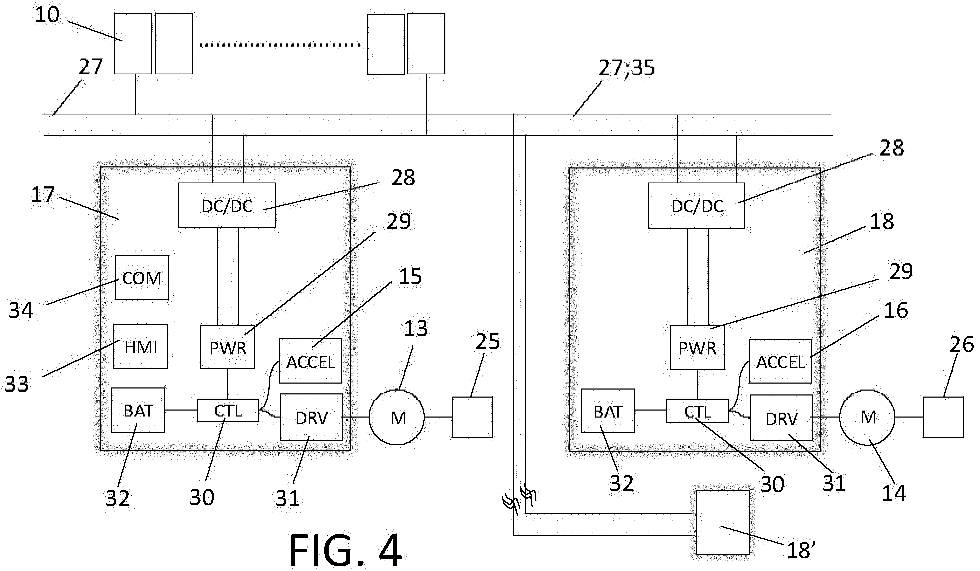

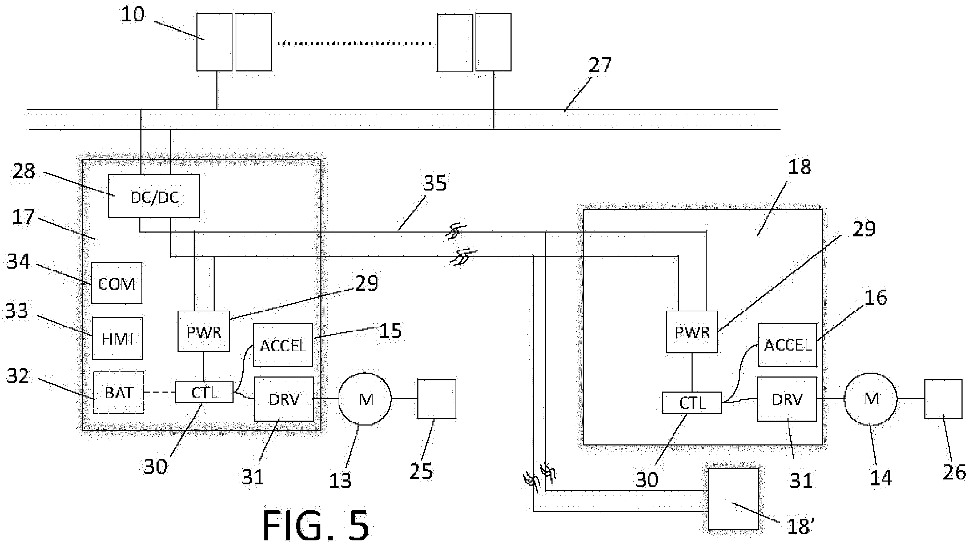

Figures 4 and 5 show two examples for connecting the controllers 17 and 18 to the power line 27 and controlling the electric motors 13 and 14.

As shown in Figure 4, the power line 27 extracting the electric power generated by the photovoltaic solar panels 10 is the data and power supply line 35 which is used for transmitting electric power and communication data between the first controller 17 and the second controller 18. In other words, the same physical means are utilized to transmit electric power and communication data between the controllers. In other words, the solar tracker string is used to connect the controllers 17 and 18 to one another, thereby reducing the tracker cost, since the string is a wiring that is always required in the photovoltaic solar panels 10 for power extraction.

As shown in Figure 5, the first controller 17 is connected to the power line 27 of the plurality of photovoltaic solar panels 10 to receive electric power from the power line 27, and the second controller 18 is connected to the first controller 17 to receive electric power and communication data from the first controller 17 through the data and power supply line 35. In this case, unlike Figure 5, a dedicated umbilical cable 35 is used to transmit electric power and communication data between the controllers 17 and 18. This option of Figure 5 uses more wiring than the option of Figure 4, but allows the second controller 18 to have simpler electronics that are therefore more cost-effective, since it does not require adapting the power from line 27, given that said function is performed by the first controller 17. For example, line 27 has a voltage of 1500 V, and the first controller 17 transforms the voltage from 1500 V to 24 V.

As seen in Figures 4 and 5, the first controller 17, acting as the master controller, comprises a DC/DC converter 28, a power unit PWR 29, a microcontroller 30, a driver 31, and the first accelerometer 15. Furthermore, the first controller 17 has a battery BAT 32, a communication interface HMI 33, and a communications port COM 34.

The DC/DC converter 28 adapts the electric power from the power line 27 so that it may be used by the different components of the first controller 17. The power unit PWR 29 receives the electric power from the DC/DC converter 28 and adapts it so that it can be used by the microcontroller 30.

The microcontroller 30 of the first controller 17 calculates the final angular position to which all the sets of panels 11 and 12 of the solar tracker must be moved. The microcontroller 30 receives the initial angular position measured by the first accelerometer 15 and sends a setpoint signal to the driver 31 of the first electric motor 13 for it to act on the first actuator 25 and move the first set of panels 11 to the final angular position. The setpoint signal sent to the driver 31 comprises a position signal, a speed signal, and a direction of rotation, and based on said signals, the driver 31 powers the first electric motor 13. The position signal has the final angular position to which the first set of panels 11 must be moved, and the speed signal has the speed at which the first set of panels 11 must be moved in order to reach the final angular position.

The final angular position may be calculated in real time by the microcontroller 30 of the first controller 17 based on an astronomical algorithm. In other words, the microcontroller 30 may calculate the position of the sun depending on the location of the solar tracker (latitude and longitude) and the time of the day. The final angular position may also be sent to the microcontroller 30 by an operator from the communication interface HMI 33, for example, to perform maintenance tasks when the photovoltaic solar panels 10 are to be moved to a specific position.

The battery BAT 32 is optional and may be used to send electric power to the motor in the event that the power obtained from the power line 27 is not enough, which occurs, for example, at night when the panels 10 do not produce any power. The communications port 34 comprises high-level communication protocols such as, for example, ZigBee or Bluetooth, used by the master controller 17 to generate the high-level communication network. The controller 17 may further have a service communication port for being connected with the microcontroller 30 in the event that the communications port 34 fails.

The second controller 18, acting as the slave controller, comprises the same elements as the first controller 17, acting as the master, with the exception that it has no communication interface HMI 33 nor communications port COM 34.

The microcontroller 30 of the second controller 18 receives the final angular position to which the second set of panels 12 must be moved from the microcontroller 30 of the first controller 17. The microcontroller 30 of the second controller 18 also receives the initial angular position measured by the second accelerometer 16. The microcontroller 30 of the second controller 18 also receives the speed at which the second set of panels 12 must be moved in order to reach the final angular position from the microcontroller 30 of the first controller 17. Based on the foregoing, the microcontroller 30 of the second controller 18 sends a setpoint signal to the driver 31 of the second electric motor 14 for it to act on the second actuator 26 and move the second set of panels 12 to the final angular position. The setpoint signal sent to the driver 31 of the second controller 18 also comprises a position signal, a speed signal, and a direction of rotation, and based on said signals, the driver 31 powers the second electric motor 14. The position signal has the final angular position to which the second set of panels 12 must be moved, and the speed signal has the speed at which the second set of panels 12 must be moved in order to reach the final angular position.

As also shown in Figure 5, the second controller 18 also has no DC/DC converter 28 nor a battery 28, since in Figure 5, the power unit PWR 29 of the second controller 18 receives the electric power from the DC/DC converter 28 of the first controller 17 through the data and power supply line 35. This allows the electronics of the second controller to be simpler and therefore more cost-effective.

In this way, the control method of the solar tracker comprises the following steps:
- selecting the final angular position of the plurality of photovoltaic solar panels 10,
- determining the initial angular position of the first set of panels 11 by means of the first position sensor 15,
- determining the initial angular position of the second set of panels 12 by means of the second position sensor 16,
- moving the first set of panels 11 to the final angular position depending on the initial angular position of the first set of panels 11, and
- moving the second set of panels 12 to the final angular position depending on the initial angular position of the second set of panels 12.

To move the first set of panels 11 to the final angular position, the first controller 17 receives the initial angular position of the first set of panels 11 measured by the position sensor 15 and determines the angle at which the first set of panels 11 must be moved, for example, by subtracting the initial angular position from the final angular position.

Then, the first controller 17 determines the direction of rotation and the speed at which the first set of panels 11 must be moved in order to reach the final angular position and powers the first electric motor 13 in order to reach said final angular position.

To move the second set of panels 12 to the final angular position, the second controller 18 receives the final angular position from the first controller 17, receives the initial angular position of the second set of panels 12 measured by the second position sensor 16, and determines the angle at which the second set of panels 12 must be moved, for example, by subtracting the initial angular position from the final angular position.

The second controller 18 also receives the speed at which the second set of panels 12 must be moved in order to reach the final angular position from the first controller 17 and powers the second electric motor 14 in order to reach said final angular position. The direction of rotation may be sent to the second controller 18 from the first controller 17, or the second controller 18 itself may determine the direction of rotation.

The first controller 17, acting as the master, monitors the operation of the second controller 18, acting as the slave, in real time. To that end, the second controller 18 sends data about the angular position of the second set of panels 12 to the first controller 17. The second controller 18 also sends data about the speed at which the second set of panels 12 is moved to the first controller 17.

For example, if the two sets of panels 11 and 12 were to be moved to a final angular position of 45°, with both sets 11 and 12 being in an initial angular position of 40°, the controllers 17 and 18 may send a single order to the electric motors 13 and 14 for them to move the sets of panels 11 and 12 from 40° to 45°.

When the angle between the initial angular position and the final angular position is less than a certain angle, for example less than 5°, the photovoltaic solar panels 10 may be moved between the initial angular position and the final angular position in a single movement, however, when the angle between the initial angular position and the final angular position is greater than a certain angle, for example greater than 5°, the photovoltaic solar panels 10 are preferably moved between the initial angular position and the final angular position in more than one movement, being established to that end partial angular positions.

According to the foregoing, after selecting the final angular position of the plurality of photovoltaic solar panels 10, the method comprises the following steps:
- determining the initial angular position of the first set of panels 11,
- determining the initial angular position of the second set of panels 12,
- selecting a partial angular position of the plurality of photovoltaic solar panels 10, the partial angular position being comprised between at least one of the initial angular positions and the final angular position,
- moving the first set of panels 11 to the partial angular position depending on the initial angular position of the first set of panels 11,
- moving the second set of panels 12 to the partial angular position depending on the initial angular position of the second set of panels 12, and
- repeating the preceding steps until reaching the final angular position of the plurality of photovoltaic solar panels 10.

For example, if the sets of panels 11 and 12 were to be moved to a final angular position of 45°, with both sets of panels 11 and 12 being in an initial angular position of 0°, the controllers 17 and 18 may send partial orders to the motors 13 and 14 for them to move the sets of panels 11 and 12 from 0° to 5°, then from 5° to 10°, then from 10° to 15°, and repeating the process until reaching 45°. This option allows minimizing the risk of misalignments between the sets of panels 10 and 11.

According to one embodiment, the first set of panels 11 and the second set of panels 12 are moved simultaneously until reaching the final angular position, i.e., all the photovoltaic solar panels 10 are moved at the same time.

According to another embodiment, the first set of panels 11 and the second set of panels 12 are moved sequentially until reaching the final angular position, wherein first the photovoltaic solar panels 10 of one set of panels 12 are moved, and then the photovoltaic solar panels 10 of the other set of panels 11 are moved.

Preferably, when the photovoltaic solar panels 10 of the two sets of panels 11 and 12 are arranged on the same main crossbar 21 of the support structure 20, the control method comprises the following steps:
- determining a maximum torsion allowed by the main crossbar 21 of the support structure 20 on which the plurality of photovoltaic solar panels 10 is arranged,
- applying a first rotation to the first part 23 of the main crossbar 21 to move the first set of panels 11 without the first rotation exceeding the maximum torsion allowed by the main crossbar 21,
- applying a second rotation to the second part 24 of the main crossbar 21 to move the second set of panels 11 without the second rotation exceeding the maximum torsion allowed by the main crossbar 21, and
- repeating the application of the first rotation and the second rotation until reaching the final angular position of the plurality of photovoltaic solar panels 10.

In this way, instead of moving the actuators 25 and 26 at the same time, the actuators 25 and 26, and therefore the sets of panels 11 and 12, are moved sequentially, at intervals, which allows the maximum electric power required for moving the photovoltaic solar panels 10 of the solar tracker to be reduced, in exchange for a small torsion in the main crossbar 21 of the support structure 20, and generally a lower advancement speed.

The maximum torsion allowed by the main crossbar 21 is determined according to the mechanical properties of the main crossbar 21. Generally, the crossbar 21 is a tubular profile with a square section, so the type of material of the tubular profile and the thickness of the profile walls must be taken into account, among other aspects, in order to determine the maximum torsion.

## Claims

1. Solar tracker comprising:
a plurality of photovoltaic solar panels (10) with a first set of panels (11) and a second set of panels (12);
a plurality of posts (19) extending and separated longitudinally along an axis (X);
a support structure (20) which is supported on the plurality of posts (19), the support structure (20) comprises a main crossbar (21) extending along the axis (X) and a plurality of transverse crossbars (22) oriented orthogonally to the main crossbar (21), the plurality of photovoltaic solar panels (10) is arranged on the support structure (20);
a first electric motor (13) which is operatively coupled to a first part (23) of the main crossbar (21) to apply a rotation to the first part (23) of the main crossbar (21) and move the first set of panels (11) to a final angular position; and
a second electric motor (14) which is operatively coupled to a second part (24) of the main crossbar (21), spaced from the first part (23), to apply a rotation to the second part (24) of the main crossbar (21) and move the second set of panels (12) to the final angular position;
wherein the solar tracker further comprises:
a first position sensor (15) for determining an initial angular position of the first set of panels (11);
a first controller (17) configured to control the first electric motor (13) and move the first set of panels (11) to the final angular position depending on the initial angular position determined by the first position sensor (15);
a second position sensor (16) for determining an initial angular position of the second set of panels (12); and
a second controller (18) configured to control the second electric motor (14) and move the second set of panels (12) to the final angular position depending on the initial angular position determined by the second position sensor (16).

2. Solar tracker according to claim 1, wherein the plurality of photovoltaic solar panels (10) is connected to a power line (27) to extract the electric power generated by the photovoltaic solar panels (10), and the first electric motor (13) and the second electric motor (14) are connected to the power line (27) to receive electric power from the power line (27).

3. Solar tracker according to claim 1 or 2, wherein the first controller (17) is a master controller and the second controller (18) is a slave controller, the first controller (17) and the second controller (18) being connected to one another through a data and power supply line (35).

4. Solar tracker according to the preceding claim, wherein the power line (27) extracting the electric power generated by the photovoltaic solar panels (10) is the data and power supply line (35) which is used for transmitting electric power and communication data between the first controller (17) and the second controller (18).

5. Solar tracker according to claim 3, wherein the first controller (17) is connected to the power line (27) of the plurality of photovoltaic solar panels (10) to receive electric power from the power line (27), and the second controller (18) is connected to the first controller (17) to receive electric power and communication data from the first controller (17) through the data and power supply line (35).

6. Solar tracker according to any of the preceding claims, wherein the position sensors (15, 16) are accelerometers.

7. Solar tracker according to the preceding claim, wherein the first accelerometer (15) is arranged in a part of the support structure (20) that supports the first set of panels (11), and the second accelerometer (16) is arranged in a part of the support structure (20) that supports the second set of panels (12).

8. Solar tracker according to the preceding claim, wherein the first accelerometer (15) is arranged in an enclosing casing of the first controller (17) which is in turn arranged in a part of the support structure (20) that supports the first set of panels (11), and the second accelerometer (16) is arranged in an enclosing casing of the second controller (18) which is in turn arranged in a part of the support structure (20) that supports the second set of panels (12).

9. Control method of the solar tracker according to any of the preceding claims, comprising the following steps:
- selecting the final angular position of the plurality of photovoltaic solar panels (10),
- determining the initial angular position of the first set of panels (11),
- determining the initial angular position of the second set of panels (12),
- moving the first set of panels (11) to the final angular position depending on the initial angular position of the first set of panels (11), and
- moving the second set of panels (12) to the final angular position depending on the initial angular position of the second set of panels (12).

10. Control method according to the preceding claim, wherein, after selecting the final angular position of the plurality of photovoltaic solar panels (10), the method comprises the following steps:
- determining the initial angular position of the first set of panels (11),
- determining the initial angular position of the second set of panels (12),
- selecting a partial angular position of the plurality of photovoltaic solar panels (10), the partial angular position being comprised between at least one of the initial angular positions and the final angular position,
- moving the first set of panels (11) to the partial angular position depending on the initial angular position of the first set of panels (11),
- moving the second set of panels (12) to the partial angular position depending on the initial angular position of the second set of panels (12), and
- repeating the preceding steps until reaching the final angular position of the plurality of photovoltaic solar panels (10).

11. Control method according to claim 9 or 10, wherein the first set of panels (11) and the second set of panels (12) are moved simultaneously until reaching the final angular position.

12. Control method according to claim 9 or 10, wherein the first set of panels (11) and the second set of panels (12) are moved sequentially until reaching the final angular position, wherein first the photovoltaic solar panels (10) of one set of panels (12) are moved, and then the photovoltaic solar panels (10) of the other set of panels (11) are moved.

13. Control method according to the preceding claim, further comprising the following steps:
- determining a maximum torsion allowed by the main crossbar (21) of the support structure (20) on which the plurality of photovoltaic solar panels (10) is arranged,
- applying a first rotation to the first part (23) of the main crossbar (21) to move the first set of panels (11) without the first rotation exceeding the maximum torsion allowed by the main crossbar (21),
- applying a second rotation to the second part (24) of the main crossbar (21) to move the second set of panels (11) without the second rotation exceeding the maximum torsion allowed by the main crossbar (21), and
- repeating the application of the first rotation and the second rotation until reaching the final angular position of the plurality of photovoltaic solar panels (10).

## Patentansprüche

1. Sonnenfolger, umfassend:
eine Vielzahl von photovoltaischen Sonnenpaneelen (10) mit einem ersten Satz von Paneelen (11) und einem zweiten Satz von Paneelen (12);
eine Vielzahl von Pfosten (19), die sich in Längsrichtung entlang einer Achse (X) erstrecken und voneinander beabstandet sind;
eine Trägerstruktur (20), die auf der Vielzahl von Pfosten (19) getragen ist, wobei die Trägerstruktur (20) eine Hauptquerstange (21), die sich entlang der Achse (X) erstreckt, und eine Vielzahl von Querstangen (22) umfasst, die orthogonal zur Hauptquerstange (21) orientiert sind, wobei die Vielzahl von photovoltaischen Sonnenpaneelen (10) auf der Trägerstruktur (20) angeordnet ist;
einen ersten Elektromotor (13), der betriebsmäßig mit einem ersten Teil (23) der Hauptquerstange (21) gekoppelt ist, um eine Drehung auf den ersten Teil (23) der Hauptquerstange (21) anzuwenden und den ersten Satz von Paneelen (11) in eine Endwinkelposition zu bewegen; und
einen zweiten Elektromotor (14), der betriebsmäßig mit einem zweiten Teil (24) der Hauptquerstange (21) gekoppelt ist, der von dem ersten Teil (23) beabstandet ist, um eine Drehung auf den zweiten Teil (24) der Hauptquerstange (21) anzuwenden und den zweiten Satz von Paneelen (12) in die Endwinkelposition zu bewegen;
wobei der Sonnenfolger ferner Folgendes umfasst:
einen ersten Positionssensor (15) zum Bestimmen einer Anfangswinkelposition des ersten Satzes von Paneelen (11);
einen ersten Controller (17), der dazu konfiguriert ist, den ersten Elektromotor (13) zu steuern und den ersten Satz von Paneelen (11) in die Endwinkelposition in Abhängigkeit von der durch den ersten Positionssensor (15) bestimmten Anfangswinkelposition zu bewegen;
einen zweiten Positionssensor (16) zum Bestimmen einer Anfangswinkelposition des zweiten Satzes von Paneelen (12); und
einen zweiten Controller (18), der dazu konfiguriert ist, den zweiten Elektromotor (14) zu steuern und den zweiten Satz von Paneelen (12) in die Endwinkelposition in Abhängigkeit von der durch den zweiten Positionssensor (16) bestimmten Anfangswinkelposition zu bewegen.

2. Sonnenfolger nach Anspruch 1, wobei die Vielzahl von photovoltaischen Sonnenpaneelen (10) mit einer Stromleitung (27) verbunden ist, um die von den photovoltaischen Sonnenpaneelen (10) generierte elektrische Energie zu entnehmen, und der erste Elektromotor (13) und der zweite Elektromotor (14) mit der Stromleitung (27) verbunden sind, um elektrische Energie von der Stromleitung (27) zu empfangen.

3. Sonnenfolger nach Anspruch 1 oder 2, wobei der erste Controller (17) ein Master-Controller und der zweite Controller (18) ein Slave-Controller ist, wobei der erste Controller (17) und der zweite Controller (18) über eine Daten- und Stromversorgungsleitung (35) miteinander verbunden sind.

4. Sonnenfolger nach dem vorhergehenden Anspruch, wobei die Stromleitung (27), die die von den photovoltaischen Sonnenpaneelen (10) generierte elektrische Energie entnimmt, die Daten- und Stromversorgungsleitung (35) ist, die zum Übertragen von elektrischer Energie und Kommunikationsdaten zwischen dem ersten Controller (17) und dem zweiten Controller (18) verwendet wird.

5. Sonnenfolger nach Anspruch 3, wobei der erste Controller (17) mit der Stromleitung (27) der Vielzahl von photovoltaischen Sonnenpaneelen (10) verbunden ist, um elektrische Energie von der Stromleitung (27) zu empfangen, und der zweite Controller (18) mit dem ersten Controller (17) verbunden ist, um elektrische Energie und Kommunikationsdaten von dem ersten Controller (17) über die Daten- und Stromversorgungsleitung (35) zu empfangen.

6. Sonnenfolger nach einem der vorhergehenden Ansprüche, wobei die Positionssensoren (15, 16) Beschleunigungsmesser sind.

7. Sonnenfolger nach dem vorhergehenden Anspruch, wobei der erste Beschleunigungsmesser (15) in einem Teil der Trägerstruktur (20) angeordnet ist, der den ersten Satz von Paneelen (11) trägt, und der zweite Beschleunigungsmesser (16) in einem Teil der Trägerstruktur (20) angeordnet ist, der den zweiten Satz von Paneelen (12) trägt.

8. Sonnenfolger nach dem vorhergehenden Anspruch, wobei der erste Beschleunigungsmesser (15) in einem umschließenden Gehäuse des ersten Controllers (17) angeordnet ist, der wiederum in einem Teil der Trägerstruktur (20) angeordnet ist, die den ersten Satz von Paneelen (11) trägt, und der zweite Beschleunigungsmesser (16) in einem umschließenden Gehäuse des zweiten Controllers (18) angeordnet ist, der wiederum in einem Teil der Trägerstruktur (20) angeordnet ist, der den zweiten Satz von Platten (12) trägt.

9. Steuerungsverfahren für den Sonnenfolger nach einem der vorhergehenden Ansprüche, umfassend die folgenden Schritte:
- Auswählen der Endwinkelposition der Vielzahl von photovoltaischen Sonnenpaneelen (10),
- Bestimmen der Anfangswinkelposition des ersten Satzes von Paneelen (11),
- Bestimmen der Anfangswinkelposition des zweiten Satzes von Paneelen (12),
- Bewegen des ersten Satzes von Paneelen (11) in die Endwinkelposition in Abhängigkeit von der Anfangswinkelposition des ersten Satzes von Paneelen (11) und
- Bewegen des zweiten Satzes von Paneelen (12) in die Endwinkelposition in Abhängigkeit von der Anfangswinkelposition des zweiten Satzes von Paneelen (12).

10. Steuerungsverfahren nach dem vorhergehenden Anspruch, wobei nach dem Auswählen der Endwinkelposition der Vielzahl von photovoltaischen Sonnenpaneelen (10) das Verfahren die folgenden Schritte umfasst:
- Bestimmen der Anfangswinkelposition des ersten Satzes von Paneelen (11),
- Bestimmen der Anfangswinkelposition des zweiten Satzes von Paneelen (12),
- Auswählen einer Teilwinkelposition der Vielzahl von photovoltaischen Sonnenpaneelen (10), wobei die Teilwinkelposition zwischen mindestens einer von den Anfangswinkelpositionen und der Endwinkelposition liegt,
- Bewegen des ersten Satzes von Paneelen (11) in die Teilwinkelposition in Abhängigkeit von der Anfangswinkelposition des ersten Satzes von Paneelen (11),
- Bewegen des zweiten Satzes von Paneelen (12) in die Teilwinkelposition in Abhängigkeit von der Anfangswinkelposition des zweiten Satzes von Paneelen (12) und
- Wiederholen der vorhergehenden Schritte, bis die Endwinkelposition der Vielzahl von photovoltaischen Sonnenpaneelen (10) erreicht ist.

11. Steuerungsverfahren nach Anspruch 9 oder 10, wobei der erste Satz von Paneelen (11) und der zweite Satz von Paneelen (12) gleichzeitig bewegt werden, bis die Endwinkelposition erreicht ist.

12. Steuerungsverfahren nach Anspruch 9 oder 10, wobei der erste Satz von Paneelen (11) und der zweite Satz von Paneelen (12) sequentiell bewegt werden, bis die Endwinkelposition erreicht ist, wobei zuerst die photovoltaischen Sonnenpaneele (10) eines Satzes von Paneelen (12) bewegt werden und dann die photovoltaischen Sonnenpaneele (10) des anderen Satzes von Paneelen (11) bewegt werden.

13. Steuerungsverfahren nach dem vorhergehenden Anspruch, ferner umfassend die folgenden Schritte:
- Bestimmen einer maximalen Torsion, die durch die Hauptquerstange (21) der Trägerstruktur (20), auf der die Vielzahl von photovoltaischen Sonnenpaneelen (10) angeordnet ist, zulässig ist,
- Anwenden einer ersten Drehung auf den ersten Teil (23) der Hauptquerstange (21), um den ersten Satz von Paneelen (11) zu bewegen, ohne dass die erste Drehung die maximale Torsion überschreitet, die durch die Hauptquerstange (21) zulässig ist,
- Anwenden einer zweiten Drehung auf den zweiten Teil (24) der Hauptquerstange (21), um den zweiten Satz von Paneelen (11) zu bewegen, ohne dass die zweite Drehung die maximale Torsion überschreitet, die durch die Hauptquerstange (21) zulässig ist, und
- Wiederholen des Anwendens der ersten Drehung und der zweiten Drehung, bis die Endwinkelposition der Vielzahl von photovoltaischen Sonnenpaneelen (10) erreicht ist.

## Revendications

1. Suiveur solaire comprenant:
une pluralité de panneaux solaires photovoltaïques (10) avec un premier ensemble de panneaux (11) et un second ensemble de panneaux (12);
une pluralité de poteaux (19) s'étendant et étant espacés longitudinalement le long d'un axe (X);
une structure de support (20) supportée par la pluralité de poteaux (19), ladite structure de support (20) comprenant une traverse principale (21) s'étendant le long de l'axe (X) et une pluralité de traverses transversales (22) orientées orthogonalement à la traverse principale (21), la pluralité de panneaux solaires photovoltaïques (10) étant disposée sur la structure de support (20);
un premier moteur électrique (13) couplé fonctionnellement à une première partie (23) de la traverse principale (21) pour appliquer une rotation à la première partie (23) de la traverse principale (21) et déplacer le premier ensemble de panneaux (11) vers une position angulaire finale;
et un second moteur électrique (14) couplé fonctionnellement à une seconde partie (24) de la traverse principale (21), espacée de la première partie (23), pour appliquer une rotation à la seconde partie (24) de la traverse principale (21) et déplacer le second ensemble de panneaux (12) vers la position angulaire finale;
le suiveur solaire comprenant en outre:
un premier capteur de position (15) permettant de déterminer une position angulaire initiale du premier ensemble de panneaux (11);
un premier contrôleur (17) configuré pour commander le premier moteur électrique (13) et déplacer le premier ensemble de panneaux (11) vers la position angulaire finale en fonction de la position angulaire initiale déterminée par le premier capteur de position (15).
un second capteur de position (16) permettant de déterminer une position angulaire initiale du second ensemble de panneaux (12);
et un second contrôleur (18) configuré pour commander le second moteur électrique (14) et déplacer le second ensemble de panneaux (12) vers la position angulaire finale en fonction de la position angulaire initiale déterminée par le second capteur de position (16).

2. Suiveur solaire selon la revendication 1, dans lequel la pluralité de panneaux solaires photovoltaïques (10) est connectée à une ligne d'alimentation (27) pour extraire l'énergie électrique générée par les panneaux solaires photovoltaïques (10), et le premier moteur électrique (13) ainsi que le second moteur électrique (14) sont connectés à la ligne d'alimentation (27) pour recevoir l'énergie électrique à partir de ladite ligne d'alimentation (27).

3. Suiveur solaire selon la revendication 1 ou 2, dans lequel le premier contrôleur (17) est un contrôleur maître et le second contrôleur (18) est un contrôleur esclave, le premier contrôleur (17) et le second contrôleur (18) étant connectés l'un à l'autre par une ligne d'alimentation et de transmission de données (35).

4. Suiveur solaire selon la revendication précédente, dans lequel la ligne d'alimentation (27) permettant d'extraire l'énergie électrique générée par les panneaux solaires photovoltaïques (10) est la ligne d'alimentation et de transmission de données (35) utilisée pour transmettre l'énergie électrique et les données de communication entre le premier contrôleur (17) et le second contrôleur (18).

5. Suiveur solaire selon la revendication 3, dans lequel le premier contrôleur (17) est connecté à la ligne d'alimentation (27) de la pluralité de panneaux solaires photovoltaïques (10) pour recevoir l'énergie électrique à partir de ladite ligne d'alimentation (27), et le second contrôleur (18) est connecté au premier contrôleur (17) pour recevoir l'énergie électrique et les données de communication à partir du premier contrôleur (17) via la ligne d'alimentation et de transmission de données (35).

6. Suiveur solaire selon l'une quelconque des revendications précédentes, dans lequel les capteurs de position (15, 16) sont des accéléromètres.

7. Suiveur solaire selon la revendication précédente, dans lequel le premier accéléromètre (15) est disposé dans une partie de la structure de support (20) qui supporte le premier ensemble de panneaux (11), et le second accéléromètre (16) est disposé dans une partie de la structure de support (20) qui supporte le second ensemble de panneaux (12).

8. Suiveur solaire selon la revendication précédente, dans lequel le premier accéléromètre (15) est disposé dans un boîtier de protection du premier contrôleur (17), lequel est à son tour disposé dans une partie de la structure de support (20) qui supporte le premier ensemble de panneaux (11), et le second accéléromètre (16) est disposé dans un boîtier de protection du second contrôleur (18), lequel est à son tour disposé dans une partie de la structure de support (20) qui supporte le second ensemble de panneaux (12).

9. Procédé de commande du suiveur solaire selon l'une quelconque des revendications précédentes, comprenant les étapes suivantes :
- sélection de la position angulaire finale de la pluralité de panneaux solaires photovoltaïques (10),
- détermination de la position angulaire initiale du premier ensemble de panneaux (11),
- détermination de la position angulaire initiale du second ensemble de panneaux (12),
- déplacement du premier ensemble de panneaux (11) vers la position angulaire finale en fonction de sa position angulaire initiale,
- déplacement du second ensemble de panneaux (12) vers la position angulaire finale en fonction de sa position angulaire initiale.

10. Procédé de commande selon la revendication précédente, dans lequel, après la sélection de la position angulaire finale de la pluralité de panneaux solaires photovoltaïques (10), le procédé comprend les étapes suivantes :
- détermination de la position angulaire initiale du premier ensemble de panneaux (11),
- détermination de la position angulaire initiale du second ensemble de panneaux (12),
- sélection d'une position angulaire partielle de la pluralité de panneaux solaires photovoltaïques (10), la position angulaire partielle étant comprise entre au moins l'une des positions angulaires initiales et la position angulaire finale,
- déplacement du premier ensemble de panneaux (11) vers la position angulaire partielle en fonction de sa position angulaire initiale,
- déplacement du second ensemble de panneaux (12) vers la position angulaire partielle en fonction de sa position angulaire initiale,
- répétition des étapes précédentes jusqu'à atteindre la position angulaire finale de la pluralité de panneaux solaires photovoltaïques (10).

11. Procédé de commande selon la revendication 9 ou 10, dans lequel le premier ensemble de panneaux (11) et le second ensemble de panneaux (12) sont déplacés simultanément jusqu'à atteindre la position angulaire finale.

12. Procédé de commande selon la revendication 9 ou 10, dans lequel le premier ensemble de panneaux (11) et le second ensemble de panneaux (12) sont déplacés de manière séquentielle jusqu'à atteindre la position angulaire finale, les panneaux solaires photovoltaïques (10) d'un premier ensemble de panneaux (12) étant déplacés en premier, puis ceux (10) de l'autre ensemble de panneaux (11) étant déplacés ensuite.

13. Procédé de commande selon la revendication précédente, comprenant en outre les étapes suivantes :
- détermination de la torsion maximale admissible par la traverse principale (21) de la structure de support (20) sur laquelle est disposée la pluralité de panneaux solaires photovoltaïques (10),
- application d'une première rotation à la première partie (23) de la traverse principale (21) pour déplacer le premier ensemble de panneaux (11), sans que cette première rotation ne dépasse la torsion maximale admissible par la traverse principale (21),
- application d'une seconde rotation à la seconde partie (24) de la traverse principale (21) pour déplacer le second ensemble de panneaux (11), sans que cette seconde rotation ne dépasse la torsion maximale admissible par la traverse principale (21),
- répétition de l'application de la première rotation et de la seconde rotation jusqu'à atteindre la position angulaire finale de la pluralité de panneaux solaires photovoltaïques (10).
